# FASCICULE DE BREVET EUROPEEN

(11) **EP 1 849 637 B1**
(45) Date de publication et mention de la délivrance du brevet: **23.12.2009**
(21) Numéro de dépôt: 07300935.9
(22) Date de dépôt: 06.04.2007
(51) Int. Cl.: B60J 3/02

(54) **Ensemble pare-soleil avec système de fixation**
Sonnenblendenanordnung mit Befestigungssystem
Visor device with attachment system.

(30) Priorité: 28.04.2006 FR 0651517
(43) Date de publication de la demande: 31.10.2007
(73) Titulaire: Peugeot Citroën Automobiles SA, 78943 Vélizy-Villacoublay Cedex (FR)
(72) Inventeur: Bonassi, Jean-Luc, 25200, MONTBELIARD (FR); Bach, Jean-Pierre, 70200, HERICOURT (FR); Deleglise, Patrice, 70200, LURE (FR); Steinmetz, Gérard, 25200, MONTBELIARD (FR)

(56) Documents cités:
- EP-A- 1 375 222
- EP-A2- 1 495 889
- US-A- 4 626 087

## Description

La présente invention concerne un ensemble pare-soleil coulissant, du type comprenant au moins deux organes de support qui comportent chacun un rail de guidage s'étendant dans le sens longitudinal par rapport au véhicule, un élément occulteur monté déplaçable en translation le long des rails entre une position arrière et une position avancée, et des moyens de fixation de l'ensemble coulissant dans la partie supérieure de l'habitacle d'un véhicule.

Dans les véhicules conventionnels, les ensembles pare-soleil sont installés en général sur la traverse avant du pavillon du véhicule. Les plaques pare-soleil rigides typiques sont rabattables autour d'un axe d'articulation entre une position inactive, dans laquelle ils s'étendent sensiblement parallèles à la surface inférieure du pavillon, et une position déployée dans laquelle ils se trouvent près du pare-brise du véhicule.

Récemment, des véhicules ont été développés qui sont équipés d'un pare-brise qui s'étend davantage vers l'arrière du véhicule. Dans ce type de véhicule, la traverse avant du pavillon se trouve au-dessus de la tête du conducteur, ou même derrière celle-ci. Un pare-soleil de construction classique, monté sur la traverse avant d'un tel véhicule, n'offre pas une occultation adéquate au conducteur dans ce cas, puisqu'il se trouve, en position déployée, à l'arrière du point d'oeil de celui-ci.

La demande FR-A-2 841 502 décrit un ensemble pare-soleil coulissant, du type indiqué ci-dessus. Il s'agit d'un pare-soleil extensible en forme de rideau flexible, monté sur un support coulissant dans des rails de guidage latéraux. Le support comporte un axe sur lequel le rideau flexible peut s'enrouler. Quand le support avec l'axe est déplacé en position avancée, le rideau se déroule. Dans la position avancée, le rideau flexible sert à occulter le point d'oeil du conducteur du véhicule.

De plus, l'ensemble pare-soleil connu par le document précité comprend deux pare-soleil rigides de construction classique, déplaçables eux aussi avec l'axe du support. En position avancée, les panneaux rigides de ces pare-soleil peuvent être pivotés autour de leur axe horizontal en position déployée pour donner une protection additionnelle au conducteur.

Tandis que l'ensemble pare-soleil connu par le document précité dispose de deux éléments occulteurs rigides, un seul rideau flexible est prévu, et les deux éléments occulteurs rigides ne peuvent se déplacer qu'ensemble.

La demande FR-A-2 696 688 décrit un ensemble pare-soleil avec un élément occulteur rigide du type conventionnel, monté pivotant sur une embase par l'intermédiaire d'un bras coudé, l'embase étant collée sur le pare-brise par un adhésif. Un ensemble pare-soleil de ce type conventionnel n'est pas susceptible d'offrir une occultation adéquate pour un véhicule équipé d'un pare-brise qui s'étend davantage vers l'arrière du véhicule.

La demande EP-A2-1 495 998 décrit un ensemble pare-soleil comprenant deux rideaux flexibles indépendants, montés chacun sur un support coulissant dans des rails de guidage de manière à permettre leur déplacement indépendamment l'un de l'autre. Chaque rideau est pourvu d'un pare-soleil rigide de construction classique. Le cadre support de cet ensemble pare-soleil présente l'inconvénient d'être encombrant et donc de rendre le pare-brise qui le supporte inesthétique.

Le document US 4,626,087 présente une fixation classique de rétroviseur.

Le but de la présente invention est donc de réaliser un ensemble pare-soleil qui assure un angle d'occultation correct pour le conducteur du véhicule et permet la gestion indépendante des rideaux pare-soleil par les passagers.

A cet effet, l'invention a pour objet un ensemble pare-soleil du type précité, caractérisé en ce qu'il comprend deux éléments occulteurs déplaçables chacun indépendamment, l'un des organes de support s'étendant en position centrale entre lesdits éléments occulteurs et comportant deux rails pour le guidage des bords adjacents de ces éléments.

Suivant d'autres caractéristiques :
- l'extrémité extérieure de l'organe de support central est fixée au moyen d'au moins un élément de fixation susceptible d'adhérer à un pare-brise ;
- l'élément de fixation comporte une embase susceptible d'être collée par une surface sensiblement plane sur le pare-brise ;
- l'embase est liée à l'organe de support par l'intermédiaire d'un élément de matière souple, notamment une rondelle, disposée entre l'extrémité libre de l'embase et le rail ;
- l'extrémité de l'organe de support central est vissée dans l'embase ;
- l'extrémité intérieure de l'organe de support central est raccordée, notamment crochetée, sur un support auxiliaire s'étendant dans le sens transversal par rapport au véhicule ;
- chaque élément occulteur comprend un rideau pare-soleil enroulé sur un axe fixe et muni d'une tige dont les extrémités sont logées respectivement dans des rails de guidage associés des organes de support ; et
- chaque élément occulteur comprend en outre au moins une plaque pare-soleil rigide articulée autour d'un axe sensiblement horizontal et transversal déplaçable en translation en déplaçant un des rideaux pare-soleil.

L'invention a également pour objet un véhicule automobile muni d'un ensemble pare-soleil tel que défini ci-dessus.

D'autres avantages et caractéristiques de la présente invention vont maintenant être décrits de manière plus détaillée à l'aide des dessins annexes donnés à titre illustratif et non limitatif et dans lesquels :
- la figure 1 est une vue simplifiée de l'arrière en perspective d'un ensemble pare-soleil selon la présente invention ;
- la figure 2 est une vue en perspective de dessus des organes de support de l'ensemble pare-soleil ;
- la figure 3 est une vue de détail en perspective d'une partie de l'organe de support cental, à échelle agrandie ;
- la figure 4 est une vue en détail en perspective de l'embase de fixation collée sur le pare-brise ;
- la figure 5 est une vue en coupe longitudinale de l'embase collée sur le pare-brise et d'une partie de l'organe de support central ;
- la figure 6 est une vue en perspective de l'objet de la figure 5 ; et
- la figure 7 est une vue similaire en perspective, une partie de l'organe de support central étant couverte par un enjoliveur.

Les orientations de la description ci-dessus sont considérées par rapport à l'habitacle du véhicule.

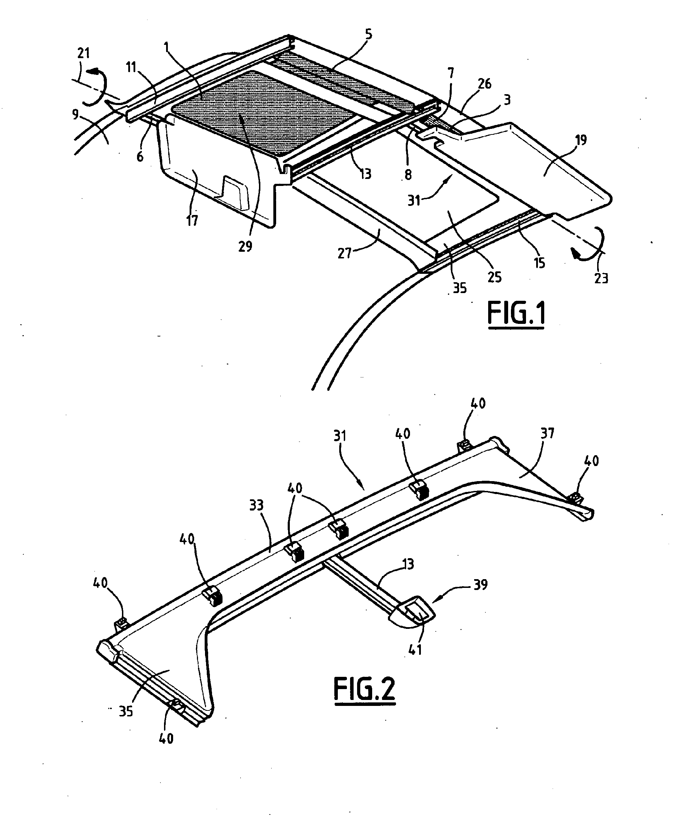

L'ensemble pare-soleil de la Figure 1 comprend deux premiers éléments occulteurs en forme de rideaux pare-soleil flexibles 1, 3. Ces rideaux pare-soleil 1, 3 sont enroulés sur des axes 5, 7 fixés au pavillon à l'arrière du pare-brise 9, et ils se déroulent de ces axes en déplaçant l'extrémité avant d'un des rideaux pare-soleil, par un mouvement de translation vers l'avant. Ces extrémités avant sont munies d'une tige transversale respective 6, 8.

Sur la Figure 1, le rideau 1 de gauche est représenté en position déroulée, tandis que le rideau 3 de droite est représenté en position enroulée sur son axe 7. Les deux extrémités des deux tiges 6, 8 sont guidées dans des rails de guidage 11, 13, 15. II y a trois rails de guidage, à savoir deux rails 11, 15 extérieurs et un rail central 13, qui est un double rail, respectivement pour l'extrémité droite de la tige 6 et l'extrémité gauche de la tige 8, les deux rails extérieurs 11, 15 s'étendant à distance et parallèlement au rail central 13.

De plus, l'ensemble pare-soleil comprend deux éléments occulteurs 17, 19 en forme de panneau rigide, chacun articulé rabattable autour d'un axe sensiblement horizontal, ces axes 21, 23 s'étendant parallèlement aux tiges 6 et 8 et étant solidaires de celles-ci.

Un ensemble pare-soleil selon la présente invention avec deux rideaux 1, 3 flexibles et deux panneaux rigides 17, 19 est approprié à donner une protection optimale au conducteur du véhicule ainsi qu'au passager. Afin de déployer indépendamment un des rideaux pare-soleil 1, 3, par exemple le rideau 1, l'utilisateur fait glisser la tige 6 correspondante par un mouvement de translation en avant, les deux extrémités de la tige 6 glissant le long des deux rails de guidage 11, 13, le rideau pare-soleil flexible 1 se déroulant en même temps de son axe 5. Une fois en position avancée, comme représenté pour le rideau pare-soleil 1 dans la Figure 1, le panneau pare-soleil rigide 17 peut être pivoté autour de son axe 21 et amené dans une position active, qui est représentée sur la Figure 1. Sur cette Figure, l'autre panneau rigide 19 se trouve en position arrière et escamotée, donc rabattu contre le pavillon du véhicule.

Le deuxième rideau pare-soleil flexible 3 est représenté complètement enroulé sur son axe 7. Dans cette position enroulée, la partie 25 du pare-brise sensiblement rectangulaire située entre la traverse avant 26 du pavillon et un élément de support avant 27, s'étendant sensiblement parallèlement à cette traverse 26 sur toute la largeur du véhicule, est dégagée. Comme cela est représenté à la Figure 1, la partie correspondante 29 du pare-brise, s'étendant de l'autre côté du rail central 13, sensiblement de mêmes dimensions que la partie 25 du pare-brise, est couverte par le rideau flexible 1.

En se référant maintenant à la Figure 2, le dispositif de support de l'ensemble pare-soleil est décrit plus en détail. L'extrémité arrière du rail central 13 est raccordée par crochetage à un élément de support 31 sensiblement en forme de U. Ce support 31 comprend une partie 33 s'étendant transversalement par rapport au véhicule, ainsi que deux parties latérales 35, 37 s'étendant sensiblement en direction longitudinale par rapport au véhicule. Le support avant 27 (non représenté sur la figure 2) relie les extrémités avant des parois 35 et 37.

Ces parties latérales 35, 37 sont formées en une pièce avec la partie transversale 33 et portent intérieurement les rails latéraux 11 et 15.

L'extrémité avant du rail central 13 est fixée au pare-brise au moyen d'une embase 39 qui comprend une surface sensiblement plane 41, susceptible d'être collée sur le pare-brise.

De plus, l'élément de support 31 comprend un certain nombre d'éléments de fixation 40, 45, 47, 49, pour fixer l'élément de support 31 au pavillon du véhicule.

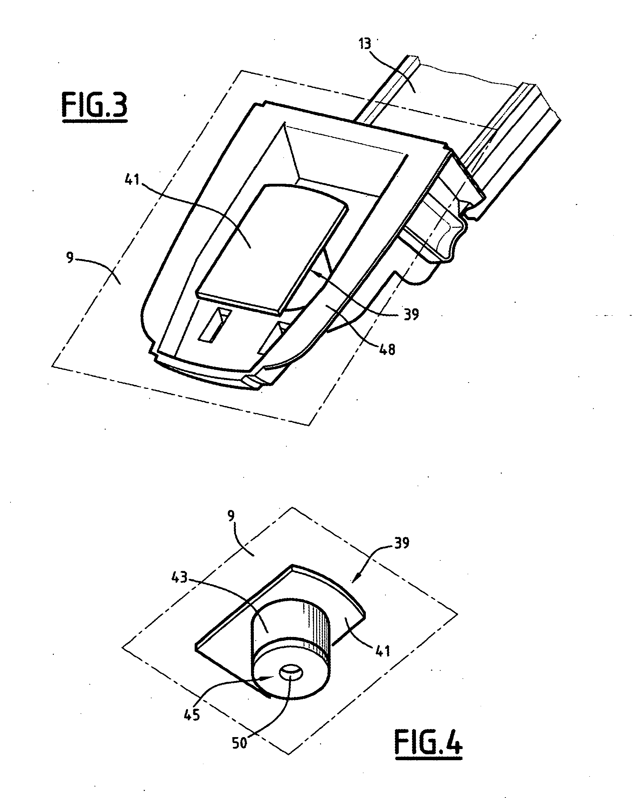

Les détails de l'embase 39 apparaissent mieux sur les Figures 3 à 6, auxquelles on se réfère dans la suite.

Sur la Figure 3, on voit le dessus de l'embase 39, comprenant la plaquette 41 sensiblement plane susceptible d'être collée sur le pare-brise 9. Sur la Figure 3, seulement la partie du rail central 13 raccordée à l'embase 39 est représentée. La plaquette 41 est située dans un plan distant et sensiblement parallèle au rail de guidage 13. Par conséquent, lorsque l'embase 39 est collée sur le pare-brise 9, le rail 13 est distant de ce pare-brise.

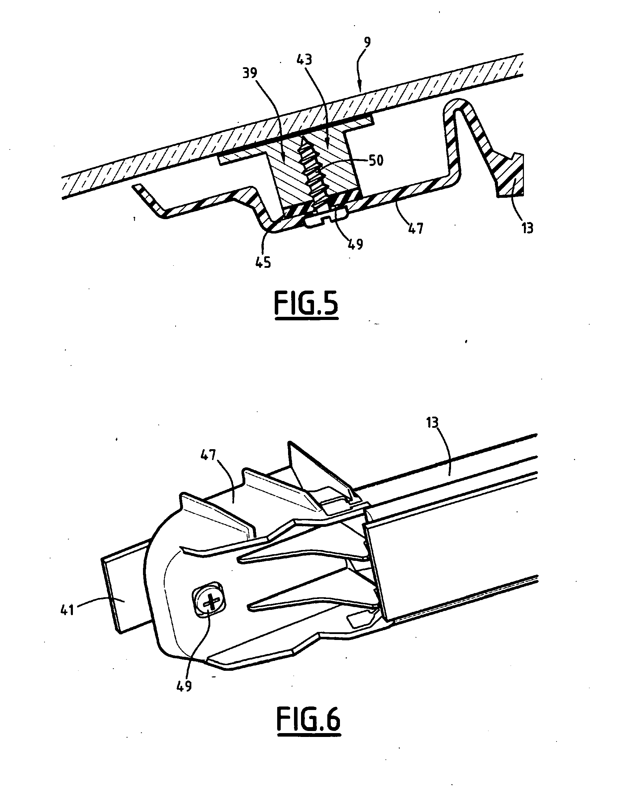

Sur la Figure 4, l'embase 39 est représentée avec la plaquette 41 collée sur le pare-brise. L'embase 39 comporte une partie cylindrique 43 solidaire du côté arrière de la plaquette 41. Une rondelle en caoutchouc 45 est disposée sur l'extrémité libre de la partie cylindrique 43. Comme on le voit sur la Figure 5, l'embase 39 est reliée au rail 13 par l'intermédiaire de cette rondelle 45 en matière souple, disposée entre la partie cylindrique 43 de l'embase et un boîtier 47 solidaire de l'avant du rail 13.

Ce boîtier 47 du rail de guidage 13 est raccordé à la partie cylindrique 43 de l'embase au moyen d'une vis auto-taraudeuse 49 qui se visse dans un évidement central non taraudé 50 de l'embase.

La rondelle 45 peut être clippée sur la partie cylindrique 43, de préférence métallique, de l'embase 39. La rondelle 45 a pour fonction première de limiter des efforts induits sur le pare-brise 9 lors de la manipulation des rideaux. Sa seconde fonction est d'éviter les transferts de vibrations entre le pare-brise 9 et l'ensemble pare-soleil en roulage. L'embase 39 collée par sa plaquette 41 sur le pare-brise 9 permet une résistance à une sollicitation mécanique par exemple de l'ordre de 50 kg.

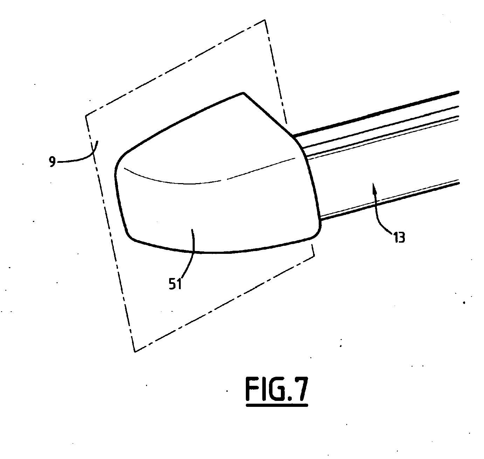

La Figure 7 représente une partie du rail de guidage 13 en perspective, en vue similaire à la Figure 6. On voit que le boîtier 47 du rail et l'embase 39 peuvent être masquées par un enjoliveur 51 pour des raisons d'esthétique.

## Revendications

1. Ensemble pare-soleil coulissant, du type comprenant au moins deux organes de support qui comportent chacun un rail de guidage (11, 13, 15) s'étendant dans le sens longitudinal par rapport au véhicule, deux éléments occulteurs (1, 3, 17, 19) montés déplaçables en translation le long des rails entre une position arrière et une position avancée, et des moyens de fixation (40, 41, 43, 49) de l'ensemble coulissant dans la partie supérieure de l'habitacle d'un véhicule, les deux éléments occulteurs (1, 3) étant déplaçables chacun indépendamment, l'un des organes de support (13) s'étendant en position centrale entre lesdits organes occulteurs et comportant deux rails pour le guidage des bords adjacents de ces éléments,
**caractérisé en ce que** l'extrémité extérieure de l'organe de support central (13) est fixée au moyen d'au moins un élément de fixation (39, 41) susceptible d'adhérer à un pare-brise (9).

2. Ensemble pare-soleil selon la revendication 1, **caractérisé en ce que** l'élément de fixation comporte une embase (39) susceptible d'être collée par une surface sensiblement plane (41) sur le pare-brise (9).

3. Ensemble pare-soleil selon la revendication 2, **caractérisé en ce que** l'embase (39) est liée à l'organe de support (13) par l'intermédiaire d'un élément (45) de matière souple, notamment une rondelle, disposée entre l'extrémité libre (43) de l'embase et le rail (13).

4. Ensemble pare-soleil selon l'une quelconque des revendications 1 à 3, **caractérisé en ce que** l'extrémité de l'organe de support central (13) est vissée dans l'embase (39).

5. Ensemble pare-soleil selon l'une quelconque des revendications 1 à 4, **caractérisé en ce que** l'extrémité intérieure de l'organe de support central (13) est raccordée, notamment crochetée, sur un support auxiliaire (31) s'étendant dans le sens transversal par rapport au véhicule.

6. Ensemble pare-soleil selon l'une quelconque des revendications 1 à 5, **caractérisé en ce que** chaque élément occulteur (1, 3, 17, 19) comprend un rideau pare-soleil (1, 3) enroulé sur un axe fixe (5, 7) et muni d'une tige (6, 8) dont les extrémités sont logées respectivement dans des rails de guidage associés (11,13, 15) des organes de support.

7. Ensemble pare-soleil selon la revendication 6, **caractérisé en ce que** chaque élément occulteur comprend en outre au moins une plaque pare-soleil rigide (17, 19) articulée autour d'un axe (21, 23) sensiblement horizontal et transversal déplaçable en translation en déplaçant un des rideaux pare-soleil (1, 3).

8. Véhicule automobile, **caractérisé en ce qu'**il comprend un ensemble pare-soleil selon l'une quelconque des revendications précédentes.

## Claims

1. Sliding sun visor assembly, of the type comprising at least two support members each comprising a guide rail (11, 13, 15) running in the longitudinal direction with respect to the vehicle, two blocking-out elements (1, 3, 17, 19) mounted such that they can be moved in a translational movement along the rails between a rear position and a forward position, and means (40, 41, 43, 49) of attaching the sliding assembly to the upper part of the cabin of a vehicle, the two blocking-out elements (1, 3) each being independently movable, one of the support members (13) running in a central position between the said blocking-out members and comprising two rails for guiding adjacent edges of these elements,
**characterized in that** the exterior end of central support member (13) is attached by means of at least one attachment element (39, 41) that can be stuck to a windscreen (9).

2. Sun visor assembly according to Claim 1, **characterized in that** the attachment element comprises a base (39) that can be bonded to the windscreen (9) via a substantially planar surface (41).

3. Sun visor assembly according to Claim 2, **characterized in that** the base (39) is connected to the support member (13) by an element (45) made of a soft material, particularly a washer, positioned between the free end (43) of the base and the rail (13).

4. Sun visor assembly according to any one of Claims 1 to 3, **characterized in that** the end of the central support member (13) is screwed into the base (39).

5. Sun visor assembly according to any one of Claims 1 to 4, **characterized in that** the interior end of the central support member (13) is fastened, particularly hooked, onto an auxiliary support (31) running in the transverse direction with respect to the vehicle.

6. Sun visor assembly according to any one of Claims 1 to 5, **characterized in that** each blocking-out element (1, 3, 17, 19) comprises a sun screen (1, 3) wound on a fixed spindle (5, 7) and fitted with a rod (6, 8) the ends of which are respectively housed in associated guide rails (11, 13, 15) of the support members.

7. Sun visor assembly according to Claim 6, **characterized in that** each blocking-out element further comprises at least one rigid sun visor panel (17, 19) articulated about a substantially horizontal and transverse spindle (21, 23) that can be moved in a translational movement by moving one of the sun screens (1, 3).

8. Motor vehicle, **characterized in that** it comprises a sun visor assembly according to any one of the preceding claims.

## Patentansprüche

1. Gleitende Sonnenschutzeinheit von dem Typ, der mindestens zwei Trägerorgane, die je eine Führungsschiene (11, 13, 15) enthalten, welche sich in Bezug auf das Fahrzeug in Längsrichtung erstreckt, zwei Abdunklungselemente (1, 3, 17, 19), die entlang der Schienen zwischen einer hinteren Stellung und einer vorderen Stellung translationsbeweglich montiert sind, und Einrichtungen (40, 41, 43, 49) zur Befestigung der gleitenden Einheit im oberen Bereich des Fahrgastraums eines Fahrzeugs enthält, wobei die zwei Abdunklungselemente (1, 3) jedes unabhängig verschiebbar sind, wobei eines der Trägerorgane (13) sich in einer Mittelstellung zwischen den Abdunklungselementen erstreckt und zwei Schienen zur Führung der benachbarten Ränder dieser Elemente aufweist, **dadurch gekennzeichnet, dass** das äußere Ende des mittleren Trägerorgans (13) mittels mindestens eines Befestigungselements (39, 41) befestigt wird, das an einer Windschutzscheibe (9) haften kann.

2. Sonnenschutzeinheit nach Anspruch 1, **dadurch gekennzeichnet, dass** das Befestigungselement einen Sockel (39) aufweist, der über eine im Wesentlichen ebene Fläche (41) auf die Windschutzscheibe (9) geklebt werden kann.

3. Sonnenschutzeinheit nach Anspruch 2, **dadurch gekennzeichnet, dass** der Sockel (39) mit dem Trägerorgan (13) über ein Element (45) aus biegsamem Material, insbesondere eine Unterlegscheibe, verbunden ist, die zwischen dem freien Ende (43) des Sockels und der Schiene (13) angeordnet ist.

4. Sonnenschutzeinheit nach einem der Ansprüche 1 bis 3, **dadurch gekennzeichnet, dass** das Ende des mittleren Trägerorgans (13) in den Sockel (39) geschraubt ist.

5. Sonnenschutzeinheit nach einem der Ansprüche 1 bis 4, **dadurch gekennzeichnet, dass** das innere Ende des mittleren Trägerorgans (13) an einen Hilfsträger (31) angeschlossen, insbesondere eingehakt ist, der sich in Querrichtung bezüglich des Fahrzeugs erstreckt.

6. Sonnenschutzeinheit nach einem der Ansprüche 1 bis 5, **dadurch gekennzeichnet, dass** jedes Abdunklungselement (1, 3, 17, 19) ein Sonnenschutzrollo (1, 3) enthält, das auf eine feste Achse (5, 7) aufgerollt und mit einer Stange (6, 8) versehen ist, deren Enden je in zugeordneten Führungsschienen (11, 13, 15) der Trägerorgane eingesetzt sind.

7. Sonnenschutzeinheit nach Anspruch 6, **dadurch gekennzeichnet, dass** jedes Abdunklungselement außerdem mindestens eine steife Sonnenblende (17, 19) enthält, die um eine Achse (21, 23) angelenkt ist, die im Wesentlichen waagrecht und quer verläuft und translationsbeweglich ist, indem eines der Sonnenschutzrollos (1, 3) verschoben wird.

8. Kraftfahrzeug, **dadurch gekennzeichnet, dass** es eine Sonnenschutzeinheit nach einem der vorhergehenden Ansprüche enthält.
